# FASCICULE DE BREVET EUROPEEN

(11) **EP 0 902 515 B1**
(45) Date de publication et mention de la délivrance du brevet: **11.06.2003**
(21) Numéro de dépôt: 98402258.2
(22) Date de dépôt: 14.09.1998
(51) Int. Cl.: H02B 1/38

(54) **Armoire à bandeau de personnalisation pour appareils électriques**
Schaltschrank mit Identifikationsstreifen
Electrical cabinet with identification strip

(30) Priorité: 15.09.1997 FR 9711539
(43) Date de publication de la demande: 17.03.1999
(73) Titulaire: Hispano Mecano Electrica S.A., 08786 Capellades (Barcelona) (ES)
(72) Inventeur: Regordosa, Lluis Xaus, 08700 Igualda (ES)

(56) Documents cités:
- EP-A- 0 551 971
- DE-A- 3 804 894
- DE-A- 19 647 726
- DE-U- 8 432 777
- DE-U- 9 421 342
- FR-A- 2 564 274
- US-A- 3 912 348
- US-A- 5 509 634

## Description

La présente invention concerne une armoire pour appareils électriques, comprenant une paroi de toit, des parois latérales, une paroi de fond et une ouverture avant, ainsi qu'une porte susceptible de fermer l'ouverture, la porte présentant un bord plié sensiblement parallèle au plan de la paroi de toit. Le terme "armoire" désigne toute enveloppe devant loger des appareils électriques et vise les armoires proprement dites, les coffrets ou autres enveloppes analogues. Les termes "avant" et "arrière" seront utilisés dans le texte pour qualifier des parties respectivement distantes ou proches de la paroi de fond.

Les armoires de ce type sont bien connues et servent à loger des appareils ou organes de liaison électrique. Il s'avère souhaitable de personnaliser de telles armoires par un bandeau rapporté sur le bord plié de la porte et maintenu sur ce bord par des moyens de fixation. Un tel bandeau est par exemple connu d'après les documents FR 2564274, DE 9421342 ou EP-551 971. Cette dernière solution nécessite cependant l'utilisation de moyens de fixation pour assurer le maintien du bandeau.

L'invention a pour but de personnaliser des armoires par un bandeau rapporté sur le bord plié de la porte et maintenu sur ce bord à l'aide de moyens mécaniques simples, excluant notamment d'associer au bord plié de la porte des moyens additionnels de fixation.

Selon l'invention, le bandeau de personnalisation est doté d'une part d'un épaulement avant de retenue prévu sensiblement dans le prolongement de la face avant du bandeau pour empêcher le déplacement du bandeau vers l'arrière de l'armoire et d'autre part d'un moyen arrière d'agrafage élastique enclenchable sur l'arrière du bord. L'épaulement de retenue coopère de préférence avec la face externe de la paroi principale de la porte et le moyen d'agrafage élastique est constitué de préférence par une pince élastique comprenant une branche élastique à zone d'appui par exemple munie d'une crosse, de manière à autoriser à la pose un léger mouvement pivotant du bandeau autour d'un axe longitudinal défini par la zone d'appui, ceci permettant la mise en place de l'épaulement.

La description est faite ci-après d'un mode de réalisation non limitatif de l'invention, en regard des figures annexées.

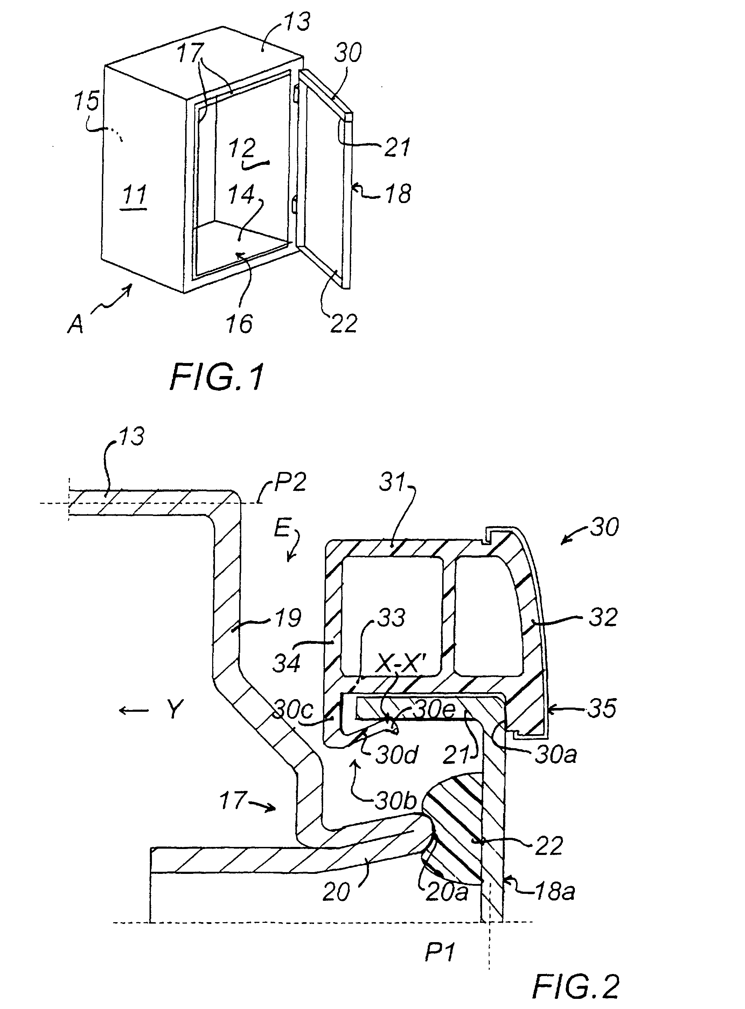

La figure 2 représente en coupe une forme de réalisation préférée du bandeau.

L'armoire A illustrée sur les figures comprend des parois latérales 11,12, une paroi de toit 13 et une paroi de fond 14, ainsi qu'un panneau arrière 15 et, pour fermer une ouverture avant 16 délimitée par des bords pliés 17 venus des parois 11-14, une porte pivotante 18. La porte 18 est montée sur des charnières non indiquées qui sont associées au bord 17 d'une paroi latérale 11 ou 12. L'armoire est métallique, mais pourrait aussi être en matière plastique ; l'appellation "armoire" désigne des armoires, coffrets ou autres enveloppes analogues destinées à loger des appareils ou organes de liaison électriques.

La paroi de toit 13 de l'armoire se termine vers l'avant par un rabat fixe 19 parallèle au plan P1 de la porte quand celle-ci est fermée ; au rabat 19 succède un pli 20 dirigé vers l'avant, ou en d'autres termes vers l'extérieur de l'armoire, de sorte qu'un espace E est laissé libre entre le plan P2 de la paroi de toit 13, perpendiculaire à P1, et l'extrémité antérieure 20a du pli 20. La porte 18 est constituée par un panneau de plan P1 présentant à sa partie supérieure un bord 21 rabattu dans l'espace E sensiblement à 90°, donc horizontalement, vers l'arrière ou en d'autres termes vers le côté intérieur de l'armoire. Dans le présent mode de réalisation et comme on le constate sur la figure 2, le bord 21 est décalé en hauteur par rapport au plan P2 vers l'intérieur de l'ouverture 16 et dans l'espace E est logé un bandeau de personnalisation 30. Sur la face interne de la porte 18 est disposé un joint d'étanchéité 22 qui coopère avec l'extrémité 20a du pli 20 pour assurer une fermeture étanche de l'ouverture.

Le bandeau de personnalisation 30 est posé sur le bord 21 de la porte 18 et maintenu sur ce bord 21 par combinaison d'un moyen de butée antérieur 30a et d'un moyen d'agrafage élastique postérieur 30b.

Le bandeau 30 est constitué d'une barrette profilée extrudée en matière plastique de section approximativement polygonale présentant une face supérieure 31, une face avant 32, une face inférieure 33 et une face arrière 34. Les faces supérieure et inférieure 31,33 sont sensiblement parallèles au plan horizontal P2, tandis que les faces avant 32 et arrière 34 sont sensiblement parallèles au rabat vertical 19, la face 33 étant posée sur le bord 21 de la porte 18.

L'épaulement 30a prévu à l'avant de la face 33, sensiblement dans le prolongement de la face avant 32, empêche le bandeau de reculer vers le rabat fixe 19. De préférence, l'épaulement 30a coopère en butée avec la face externe 18a de la paroi principale de la porte 18.

Le moyen d'agrafage élastique 30b est constitué ici par une pince élastique formée d'un élément vertical 30c dans le prolongement de la paroi 34, d'une branche élastique 30d dont la zone 30e, notamment en forme de crosse, prévue pour venir en appui sous le bord plié 21, autorise à la pose un léger mouvement pivotant du bandeau autour d'un axe longitudinal X-X' défini par cette zone d'appui.

La face avant 32 porte des indications personnalisant l'armoire et porte un cache 35 encliqueté sur le bandeau ; le cache 35 peut lui-même porter les indications personnalisant l'armoire ou recouvrir une bande indicative insérée entre lui et la face 32. Comme on le voit, le bandeau, étant agrafé grâce à la pince 30b et retenu par l'épaulement 30a, ne peut pas être extrait de la porte sauf par un mouvement volontaire de pivotement autour de X-X'. La position initiale pivotée de pose du bandeau est figurée en tirets sur la figure 2. La position finale est définie par coopération de l'épaulement 30a avec la face externe 18a de la paroi principale de la porte.

## Revendications

1. Armoire pour appareils électriques, comprenant une paroi de toit (13), une ouverture avant (16) et une porte (18) susceptible de fermer cette ouverture, la porte présentant un bord plié (21) vers l'intérieur de l'ouverture (16) et sensiblement parallèle au plan (P2) de la paroi de toit, tandis qu'un bandeau de personnalisation est disposé sur le bord plié (21) de la porte,
**caractérisée par le fait que** :
le bandeau de personnalisation (30) est doté d'une part d'un épaulement avant de retenue (30a) prévu sensiblement dans le prolongement de la face avant (32) du bandeau (30) pour empêcher le déplacement du bandeau vers l'arrière de l'armoire et d'autre part d'un moyen arrière d'agrafage élastique (30b) enclenchable sur l'arrière du bord (21).

2. Armoire selon la revendication 1, **caractérisée par le fait que** le moyen d'agrafage élastique (30b) est constitué par une pince élastique comprenant une branche élastique (30d) à zone d'appui (30e) coopérant avec l'arrière du bord (21) et autorisant un mouvement pivotant du bandeau autour d'un axe longitudinal (X-X') défini par la zone d'appui (30e).

3. Armoire selon la revendication 1, **caractérisée par le fait que** la position du bandeau (30) sur le bord plié de la porte (18) est définie par appui de l'épaulement de retenue (30a) sur la face externe (18a) de la paroi principale de la porte (18).

4. Armoire selon la revendication 1, **caractérisée par le fait que** le bandeau (30) est extrudé et que le moyen d'agrafage élastique (30b) vient d'extrusion.

## Patentansprüche

1. Schrank für elektrische Geräte mit einer Dachwand (13), einer vorderen Öffnung (16) und einer Tür (18) um diese Öffnung verschließen zu können, wobei die Tür einen in das Innere der Öffnung (16) gebogenen Rand (21), der wesentlich parallel zur Ebene (P2) der Dachwand ist, aufweist, wobei ein Personalisierungsband auf dem gebogenen Rand (21) der Tür angeordnet ist, **dadurch gekennzeichnet, dass** das Personalisierungsband (30) einerseits mit einem vorderen Haltungsansatz (30a) versehen ist, der wesentlich in der Verlängerung der Vorderseite (32) des Bandes (30) vorgesehen ist, und andererseits ein hinteres elastisches Verhakungsmittel (30b), das auf den hinteren Teil des Randes (21) eingerastet werden kann.

2. Schrank nach Anspruch 1, **dadurch gekennzeichnet, dass** das elastische Verhakungsmittel (30b) aus einer elastischen Klemme mit einem elastischen Bügel (30d) mit einem Stützbereich (30e) besteht, welche mit dem hinteren Teil des Randes (21) zusammenwirkt und eine Schwenkbewegung des Bandes um eine durch den Stützbereich (30e) bestimmte Längsachse (X-X') herum erlaubt.

3. Schrank nach Anspruch 1, **dadurch gekennzeichnet, dass** die Position des Bandes (30) auf dem gebogenen Rand der Tür (18) durch die Stützung des Haltungsansatzes (30a) auf der Außenseite (18a) der Hauptwand der Tür (18) bestimmt ist.

4. Schrank nach Anspruch 1, **dadurch gekennzeichnet dass** das Band (30) stranggepresst ist und dass das elastische Verhakungsmittel (30b) von dem Strangpressen kommt.

## Claims

1. A cabinet for electrical equipment, comprising a top wall (13), a front opening (16), and a door (18) suitable for closing this opening, said door having an edge (21) folded towards the interior of the opening (16) and substantially parallel to the plane (P2) of the top wall, whereas a personalisation fascia is arranged on the folded edge (21) of the door,
**characterised in that**:
the personalisation fascia (30) is equipped on the one hand with a front retaining shoulder (30a), provided substantially in the extension of the front face (32) of the fascia (30), in order to prevent the fascia from moving towards the rear of the cabinet, and on the other hand with rear elastic cramping means (30b) which can snap-lock onto the rear of the edge (21).

2. The cabinet as claimed in Claim 1, **characterised in that** the elastic cramping means (30b) are constituted by an elastic clip comprising an elastic branch (30d) with support zone (30e) cooperating with the rear of the edge (21) and enabling a pivoting movement of the fascia to be made about a longitudinal axis (X-X') defined by the support zone (30e).

3. The cabinet as claimed in Claim 1, **characterised in that** the position of the fascia (30) on the folded edge of the door (18) is defined by support of the retaining shoulder (30a) on the external face (18a) of the main wall of the door (18).

4. The cabinet as claimed in Claim 1, **characterised in that** the fascia (30) is extruded and **in that** the elastic cramping means (30b) are extruded.
